# EUROPEAN PATENT SPECIFICATION

(11) **EP 0 452 666 B1**
(45) Date of publication and mention of the grant of the patent: **07.12.1994**
(21) Application number: 91103590.5
(22) Date of filing: 08.03.1991
(51) Int. Cl.: G01B 15/02

(54) **Cross scanning method and equipment for measuring the thickness of a film coating**
Querachsenabtastverfahren und Vorrichtung zur Messung der Dicke eines Beschichtungsfilms
Procédé de balayage transversal et équipement pour mesurer l'épaisseur d'un film de revêtement

(30) Priority: 20.04.1990 IT 2009890
(43) Date of publication of application: 23.10.1991
(73) Proprietor: ELECTRONIC SYSTEMS S.P.A., Lonate Pozzolo (Varese) (IT)
(72) Inventor: Masotti, Alessandro, I-28040 Lesa (Novara) (IT)
(74) Representative: La Ciura, Salvatore

(56) References cited:
- EP-A- 0 127 279
- FR-A- 2 226 645
- US-A- 4 476 717

## Description

This invention proposes a cross scanning method and equipment for detecting the thickness of a coating, such as a paper band or similar, applied to a two-dimensional support, such as plastic film, while it is moving.

Using the proposed method, variations in coating thickness can be measured along a line at right angles to the direction the support layer is moving, without these measurements being influenced by variations in thickness along the direction of travel of the film. There are many instances where the application of a coating, such as a sheet of paper or similar, to a two-dimensional support, such as plastic film, is necessary.

For example, this is necessary in the manufacture of adhesive tape, paper for packing food, double-sided tape, in the imitation leather manufacturing industry, etc.

There are automatic machines in use for applying coatings, where the paper or support film from a reel passes through the devices which apply the coating, and is then wound onto a second reel.

The methods used to regulate and apply coating layers (rolling presses, doctor blades, extruders, etc.) are already well known, and as such, are not described here.

There are also devices for detecting the thickness of an applied coating by measuring any deviations from a set value.

These devices generally include a radiation source, for example a rays, coupled with a sensor positioned at a certain distance from it.

The film to which a coating has been applied passes between the source and the sensor which move back and forth at right angles to the direction the film is moving.

On the basis of the radiation absorption detected by the sensor, any variations in the thickness of the applied coating can be determined.

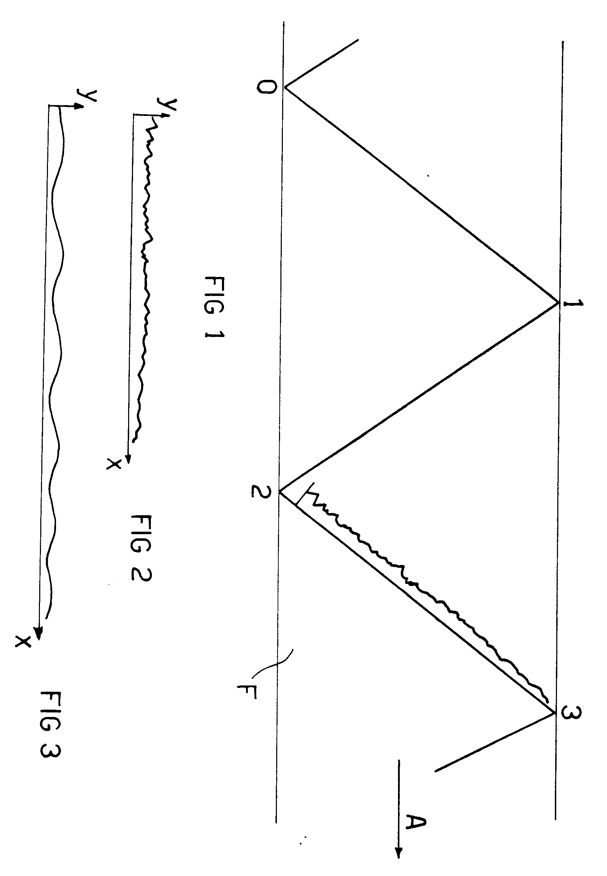

The system which has just been described is illustrated in Figures 1 to 3, which show:
1) View from above of a strip of material to which a coating has been applied, showing the path along which the sensor measures the thickness of the coating;
2) Graph showing thickness variations which have been measured across the strip;
3) Graph showing thickness variations which have been measured along the strip;

In this type of device, the film to which the coating has been applied, marked by letter F in Figure 1, advances in the direction of arrow A.

The thickness detector, which includes a radiation source, normally an ionization chamber, and a sensor, on opposite sides of the moving film, move in alternate directions at right angles to the direction the film is moving.

The system is calibrated beforehand, so that the thickness of the coating that has been applied can be measured on the basis of the amount of radiation that is absorbed by the moving film as detected by the sensor.

Measurement is along a zigzag path 0 - 1 - 2 - 3..., and the angle of the path in respect of the lengthwise centreline of the film depends on the movement speed of the film and that of the detection device.

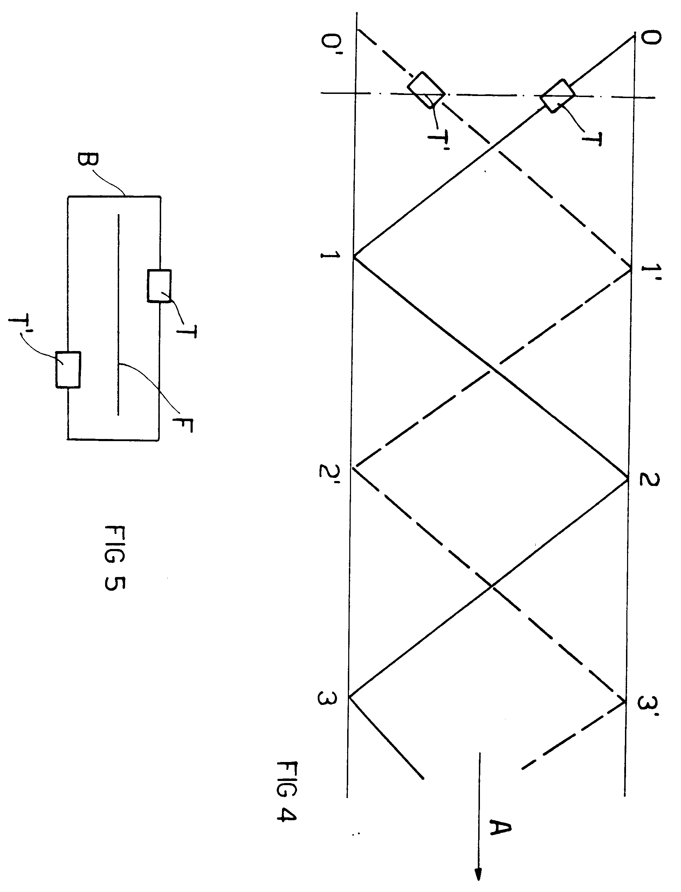

Measurement is therefore along sections of the zigzag path, and the device supplies a series of graphs showing coating thickness for each section of the path, as shown in Figure 2, where the coordinates along the section measured are shown on the x-axis, and the value detected along the y-axis.

Using this system, it is possible to prevent the sensor from moving thereby measuring coating thickness lengthwise, obtaining a graph like the one shown in Figure 3.

This sytem has, however, several limitations and handicaps, in as much as measurements made across the tape are affected by errors in lengthwise tolerance.

In order to clarify this point the following observations can be made:

When a coating is applied to a film, the thickness of this coating is not perfectly constant, but varies in a cyclic fashion along the film (always in a lengthwise direction), giving rise to undulations, due for example to imperfections in the cylinder of a rolling press, pulsations in an extruder, or to periodic variations in the material distributed due, for example, to variations in temperature, pressure, etc.

Aside from those already mentioned, there are often variations in the thickness of material deposited across the film.

This can happen, for example, if the cylinders of a rolling press are not perfectly parallel, or if a doctor blade is not perfectly positioned when other systems are used, etc.

All these imperfections, however limited, require eliminating or at least reducing to a minimum, considering that tolerances not exceeding one micron are often required.

It is easy to see what difficulties may be encountered.

EP-A-0 127 279 discloses a method for measuring the thickness of a coating of a film, which comprises the simultaneous detection of film and coating thickness by means of two sensors which scan the film in alternate, opposite directions detecting at two points which are symmetrical to the film axis.

FR-A-2 226 645 discloses a detection apparatus comprising two radiation sources on one side of the film and two sensors on the other side, which detect the quantity of radiations absorbed by the film.

The types of machinery currently used are extremely accurate and can be extremely finely adjusted, and highly sophisticated measuring devices are normally used which are capable of detecting thickness variations of less than a micron.

Consequently, these machines are capable of limiting imprecisions across the tape to within required tolerance.

However, this capability is made ineffective by the fact that using current measuring methods, the results obtained are influenced by errors that occur lengthwise along the film, which when algebraically added to measurements across the film, often make the results obtained unreliable.

The need is therefore felt for a system which allows available machinery to be used to its best, by taking precise measurements across the film without these results being influenced by undulations or thickness variations along the film.

To this end, the measuring method utilized by the proposed invention uses sensors which simultaneously move back and forth across the film in opposite directions and at right angles to the direction the film is advancing.

This system scans along two sections which are symetrical in respect of the lengthwise axis of the film, and instant by instant, two measurements are taken coming from points on opposite sides of the film in respect of the lengthwise axis of the film, so that coating thickness differences between the two points can be precisely evaluated, independently of lengthwise errors or undulations.

The part that follows describes the invention in detail, as an example but not limited to it, as shown in the Figures on table 2, where:
Figure 4 shows the view from above of the paths followed by the sensors using the method in this invention;
Figure 5 shows the measuring device system of an item of thickness detection equipment constructed as per the invention.

In Figure 5, according to the invention, the system consists of: framework B, through which previously coated film F passes and along which move a pair of heads, T and T′, which each include a radiation source coupled to a detector.

The heads are only outlined in the Figure, as they are of a normal type. It suffices to say that in each head the radiation source is positioned on the opposite side of the film from the detector, so that the radiation absorbed by the film and coating can be measured.

The heads move in alternate directions along their supports, at right angles to the direction the film is moving, and are connected to the same drive mechanism.

For example, both heads could run along supports connected to framework B, and be driven by a drive chain attached to these supports.

Using this method, both heads are synchronized, they move along the same path but in opposite directions.

In Figure 4, two series of sections are shown, one with a solid and one with a broken line, along which heads T and T′ detect the thickness of the film coating.

Head T therefore follows the series of sections 0-1-2-3-4...., while head T′ follows a similar series of sections, 0′-1′-2′-3′....

Using this system, for each instant, two measurements are obtained, taken from two symetrically opposed points in respect of the central lengthwise axis of film F.

Any lengthwise differences are therefore the same for both points, and it will be possible to compare the two measurements and check the precise coating thickness difference along line L at right angles to the direction the film travels and passing through both points, independenly of lengthwise thickness variations.

It is also possible using this system, to lock the heads in one or more preset positions, to carry out scanning along the film, without interrupting measurement across the film.

Using this system, in fact, two symetrical measurements in respect of the central lengthwise axis can always be obtained and compared to reveal thickness differences.

There are mumerous advantages to this system; for instance, coating thickness differences can be detected on both the left and right hand sides of the tape at the same time, without being influenced by lengthwise defects;
- Double speed scanning can be carried out. There is a practical limit to head movement speed due to their mechanical characteristics and ionization chamber response times, which can only be overcome by increasing the number of heads used;
- Lengthwise profiles can be analyzed in one or more preset positions, without interrupting the automatic adjustment of the equipment, in order to correct thickness differences across the film;
- Scan cycles can be combined in both directions;
- The two heads can give a more precise reading, which can be achieved by aligning the heads and measuring the thickness in the same direction, bearing in mind the delay time between one head and the other and the film advancement speed, so that any difference in readings between one head and the other can be eliminated.

An expert in the field could suggest numerous modifications and changes of the invention as defined in the claims.

## Claims

1. Method for measuring the thickness of a film or of a coating film while it advances, by means of two sensors which scan the film, moving in alternate and opposite directions at right angles to the direction in which the film advances, said method providing for the comparison of these readings so that the thickness differences between two points can be precisely evaluated, independently of the lengthwise errors or undulations, characterized by the fact that the sensors read points which are symmetrical to the lengthwise axis of the film and the difference is calculated between the measurements at said symetrical points.

2. Method as per claim 1, which is characterized by the fact that said two sensors move along the whole width of the film.

3. Cross scanning equipment for measuring the thickness of a film, or a film coating, while it is advancing, using the method of claims 1 and 2, comprising a pair of detection heads each consisting of a radiation source on one side of the film and a radiation sensor on the other side, which detects the quantity of radiation absorbed by the film and a system for moving the heads simultaneously in alternate and opposite directions at right angles to the direction in which the film advances, characterized in that the heads cross the whole width of the film and measure symmetrical points in respect of the lenghtwise axis of the film, and in that means are provided for calculating the difference between the measurements at said symmetrical points.

## Patentansprüche

1. Verfahren zum Messen der Dicke eines Films oder eines Beschichtungsfilms, während sich dieser vorwärts bewegt, mittels zwei Sensoren, die den Film abtasten, sich in abwechselnde und entgegengesetzte Richtungen in rechten Winkeln zu der Richtung bewegen, in der sich der Film vorwärts bewegt, wobei der Vergleich dieser Auswertungen vorgesehen ist, so daß die Dickenunterschiede zwischen zwei Stellen präzis bewertet werden können, unabhängig von Fehlern oder Wellungen in Längsrichtung,
**dadurch gekennzeichnet,**
daß die Sensoren Punkte abtasten, die symmetrisch zur Längsachse des Films sind, und daß die Differenz zwischen den Messungen an diesen symmetrischen Punkten errechnet wird.

2. Verfahren nach Anspruch 1, **dadurch gekennzeichnet**, daß die zwei Sensoren sich längs der gesamten Breite des Films bewegen.

3. Querabtastvorrichtung zum Messen der Dicke eines Films oder eines Beschichtungsfilms, während sich dieser vorwärts bewegt, unter Verwendung des Verfahrens der Ansprüche 1 und 2, umfassend ein Paar von Detektorköpfen, von denen jeder aus einer Strahlungsquelle auf einer Seite des Films und einem Strahlungssensor auf der anderen Seite besteht, der die Menge der Strahlung feststellt, die durch den Film absorbiert wird, und ein System zum gleichzeitigen Bewegen der Köpfe in abwechselnde und entgegengesetzte Richtungen in rechten Winkeln zu der Richtung, in der sich der Film vorwärts bewegt,
**dadurch gekennzeichnet**,
daß die Köpfe die gesamte Breite des Films überqueren und symmetrische Punkte bezüglich der Längsachse des Films messen, und daß eine Einrichtung zum Berechnen der Differenz zwischen den Messungen an diesen symmetrischen Punkten vorgesehen ist.

## Revendications

1. Procédé de mesure de l'épaisseur d'un film ou d'un film de revêtement pendant qu'il avance, au moyen de deux capteurs qui explorent le film, de déplacement dans des directions alternées et opposées, perpendiculaires à la direction dans laquelle avance le film, ledit procédé effectuant la comparaison des ces lectures, de manière que les différences d'épaisseurs entre deux points puissent être évaluées avec précision, indépendamment des erreurs ou des ondulations dans le sens de la longueur, caractérisé par le fait que les capteurs lisent des points symétriques à l'axe longitudinal et en ce que la différence est calculée entre les mesures au niveau desdits points symétriques.

2. Procédé selon la revendication 1, caractérisé par le fait que lesdits deux capteurs se déplacent sur toute la largeur du film.

3. Equipement d'exploration transversale servant à mesurer l'épaisseur d'un film ou d'un film de revêtement pendant qu'il avance, à l'aide du procédé des revendications 1 et 2, comprenant un couple de têtes de mesure, consistant chacun en une source de rayonnement située d'un coté du film et en un capteur de rayonnement situé de l'autre coté, mesurant la quantité de rayonnement absorbée par le film, et comprenant un système servant à déplacer simultanément les tetes dans des directions alternées et opposées, perpendiculaires à la direction dans laquelle avance le film, caractérisé en ce que les têtes s'étendent sur toute la largheur du film et mesurent des points symétriques par rapport à l'axe longitudinal du film, et en ce que des moyens sont prévus pour calculer la différence entre les mesures au niveau desdits points symétriques.
